# EUROPÄISCHE PATENTSCHRIFT

(11) **EP 0 839 892 B1**
(45) Veröffentlichungstag und Bekanntmachung des Hinweises auf die Patenterteilung: **08.01.2003**
(21) Anmeldenummer: 97118328.0
(22) Anmeldetag: 22.10.1997
(51) Int. Cl.: C10J 3/00, C10B 53/00, C10G 1/00, C10K 1/00

(54) **Verfahren zur vollständigen stofflichen, emissionslosen Nutzung durch Hochtemperatur-Recycling und durch fraktionierte stofflich spezifische Konvertierung des entstehenden Synthese-Rohgases**
Process for the complete and emissionless application of synthesis raw gas by high temperature recycling and by fractional material-specific conversion
Procédé pour l'application complète et sans émissions d'un gaz brut de synthèse par recyclage à haute température et par conversion matériau-spécifique

(30) Priorität: 29.10.1996 DE 19644964; 15.05.1997 DE 19720450; 11.07.1997 DE 19729816; 12.08.1997 DE 19734911
(43) Veröffentlichungstag der Anmeldung: 06.05.1998
(73) Patentinhaber: THERMOSELECT AKTIENGESELLSCHAFT, FL-9490 Vaduz (LI)
(72) Erfinder: Kiss, Günter H., 6648 Minusio (CH)
(74) Vertreter: Pfenning, Meinig & Partner

(56) Entgegenhaltungen:
- EP-A- 0 050 579
- DE-A- 2 208 477
- DE-A- 3 412 581
- DE-A- 3 714 016
- DE-A- 4 215 143
- DE-A- 4 417 613
- DE-A- 4 417 614
- DE-C- 3 923 840

## Beschreibung

Die Erfindung betrifft ein Verfahren zur Wertstoff-Rückgewinnung bzw. Nutzbarmachung aus Synthese-Rohgas, das bei der Vergasung von kommunalen oder von anderen Abfällen, vorzugsweise auch für Gift- und Sondermüll an sich beliebiger Art anfällt, gemäß dem Oberbegriff des Anspruches 1 sowie eine Vorrichtung zur Verfahrensdurchführung.

Abfallvergasung gewinnt als Verfahren zur thermischen Abfallbehandlung zunehmend an Bedeutung, vor allem wegen seines großen Giftstoff-Vernichtungspotentials Darüber hinaus wird dabei das Synthesegas als thermisch oder chemisch nutzbarer Wertstoff gewonnen, und auch Fe-Metalle und verglaste Mineralstoffe fallen in direkt nutzbarer Form an. Im Synthese-Rohgas sind jedoch noch Schwermetalle, Chlor und Schwefel enthalten. Diese Elemente - an sich als chemische Grundstoffe Wertstoffe - sind für die Biosphäre entweder Umweltgifte (Schwermetalle), oder ihre Reaktionsprodukte, vor allem mit Feuchtigkeit, sind Bestandteile des sauren Regens. Eine Gaswäsche des Synthese-Rohgases ist daher unumgänglich und in vielfältiger Ausführung seit langem Stand der Technik. Filter (Gewebe), Adsorption (Aktivkohle, Fällungreaktionen und Ionenaustausch werden zur Reinigung allgemein, also auch zur Synthese-Rohgasreinigung herangezogen, und zwar in unterschiedlichen Kombinationen. Die dabei anfallenden Schlämme und Stäube sind beim derzeitigen Stand der Technik Sonderabfall, der entsprechend kostenträchtig durch Deponierung entsorgt werden muß. Zwar ist das Volumen dieses Sonderabfalles gemessen am Ausgangsvolumen des Abfalls gering, trotzdem ist die Deponierung der Reststoffe der Gaswäsche eine unbefriedigende Lösung:
- Jede Sonderabfall-Deponie besitzt ein Restrisiko für die Umwelt, und
- es werden technisch nutzbare Wertstoffe dem wünschenswerten und vom Gesetzgeber geforderten Stoffkreislauf der Wirtschaft entzogen.

Aufgabe der Erfindung ist es daher, ein Verfahren zur Wertstoffgewinnung aus Synthese-Rohgas bei der Abfallvergasung anzugeben und so die Abfallvergasung frei von Deponie-Reststoffen zu gestalten. Aufgabe der Erfindung ist es weiterhin, eine Umweltbelastung durch Abwasser auszuschließen. Schließlich ist es auch Aufgabe der Erfindung, eine Vorrichtung zur Durchführung des erfindungsgemäßen Verfahrens anzugeben. Bezüglich des Verfahrens wird diese Aufgabe durch den kennzeichnenden Teil des Anspruches 1 gelöst, die Unteransprüche geben hierzu vorteilhafte Weiterbildungen an. Bezüglich der Vorrichtung gibt Anspruch 11 die Lösung an mit vorteilhaften Weiterbildungen in den Unteransprüchen.

Durch die stufenweise Konvertierung der als Schadstoffe im Synthese-Rohgas enthaltenen Inhaltsstoffe in Wertstoffe in getrennten gesondert temperierten Naßbehandlungsstufen wird die Voraussetzung für die Rückgewinneung der Inhaltsstoffe geschaffen, wobei die Konvertierung, d.h. die Überführung der Inhaltsstoffe in eine wiedergewinnbare Form, in getrennten gesondert temperierbaren Naßbehandlungsstufen optimale spezifischen Inhaltsstoffen angepaßte Konvertierungsbedingungen ermöglicht. Die Temperatur der Behandlungsstufen wird dabei zweckmäßigerweise durch die für die partielle Abscheidung erforderliche gestufte Kondensation des im Synthese-Rohgas enthaltenen Wasserdampfes vorgegeben. Die zu Wertstoffen konvertierten Inhaltsstoffe der getrennten Konvertierungsstufen werden anschließend dadurch zurückgewonnen, daß die Lösungen und Kondensate der unterschiedlichen Konvertierungsstufen zusammengeführt und gemeinsam nacheinander abgestuften Fällungsreaktionen und Ionenaustauschprozessen unterworfen werden, und zwar unter Rückgewinnung des Prozeßwassers. Eine nachgeordnete Kältetrocknung des von den unerwünschten Inhaltsstoffen gereinigten Synthesegases entfernt die Restfeuchte, die abschließend zusammen mit wiedergewonnenem Prozeßwasser den einzelnen Konvertierungsstufen erneut zugeführt wird, so daß ein geschlossener unterer Prozeßwasser-Kreislauf entsteht.

Es entsteht also dadurch, daß zunächst bei der Reinigung des Synthese-Rohgases dessen Inhaltsstoffe nicht nur abgeschieden, sondern vor der Abscheidung in eine nach der Abscheidung direkt wiederverwertbare Form konvertiert werden, die Voraussetzung für eine reststofffreie Synthesegasreinigung, und dadurch, daß das Prozeßwasser und die Kondensate der Konvertierungsstufen gemeinsam abgestuften Fällungs- und Ionenaustausch-Reaktionen unterworfen werden, eine einfache Möglichkeit, die Wertstoffe wiederzugewinnen, da die Reaktionen in den Konvertierungsstufen und die Art der Fällungs- und Ionenaustausch-Reaktion aufeinander abstimmbar gestaltet werden können.

Inhaltsstoffe des Synthese-Rohgases können gegebenenfalls auch direkt, d.h. ohne Konvertierung separiert werden, was jedoch nur dann im Sinne des Erfindungsgedankens ist, wenn der Inhaltsstoff in dieser Form technisch nutzbar ist. Es kann daher vorteilhaft sein, eine katalytisch wirkende, gesondert betreibbare Abscheidungsstufe im Strömungsweg des Synthese-Rohgases anzuordnen.

Eine derartige Abscheidungsmöglichkeit besteht beispielsweise für Schwefel, der mit Hilfe des katalytisch wirkenden sogenannten "Sulferox"-Verfahrens elementar abgeschieden werden kann und in dieser Form ein vielseitig nutzbarer Wertstoff ist.

Der Reinigung des Synthese-Rohgases ist beim derzeitigen Stand der Technik meist eine schockartige Kühlung unmittelbar nach dem Verlassen des Hochtemperaturreaktors vorgeschaltet, um eine "De-novo"-Synthese organischer Schadstoffe zu unterbinden. Dabei durchströmt das Synthese-Rohgas eine Wasserbrause. Erfindungsgemäß kann bereits diese Wasserbrause, die sogenannte "Quench", dadurch als erste Konvertierungsstufe genutzt werden, daß sie als Sprühquench im pH-Bereich < 5, also im sauren Bereich, betrieben wird. Chlorwasserstoff und Schwermetalle werden dabei zu wiedergewinnbaren Chloriden konvertiert. Nach der sauer eingestellten Sprühquench durchläuft das Synthese-Rohgas eine neutralisierende basisch eingestellte Naßbehandlungsstufe. Bei diesem Durchlauf wird es für die nachfolgenden spezifischen Konvertierungsstufen optimal temperiert. Es ergeben sich damit mehrere Vorteile:

Der im Synthese-Rohgas enthaltene Wasserdampf wird in der Quench kondensiert und behindert nachfolgende Konvertierungen nicht;
das aus der Sprühquench mitgerissene Wasser wird in der Neutralisierungsstufe zurückgehalten und durch die Neutralisation wieder verwendbar;
das Synthese-Rohgas tritt in nachfolgende Behandlungsstufen mit optimaler Temperatur ein, wodurch dort die Reaktionsabläufe verbessert und beschleunigt werden.

Besonders vorteilhaft ist es, wenn das so temperierte Synthese-Rohgas nachfolgend mehrere Konvertierungsstufen durchläuft, die in einem gemeinsamen, aber entsprechend den vorgesehenen Stufen unterteilten Behälter angeordnet sind. Eine derartige Anordnung ist beispielsweise in EP 95 10 6932.7 unter der Bezeichnung "Kombinationswäscher" beschrieben. Innerhalb dieses Kombinationskonverters kann zweckmäßigerweise eine Entstaubungsstufe angeordnet werden, vorteilhafterweise mit einem Entstaubungsmittel größerer Viskosität als Wasser, beispielsweise Glycerin. Das Entstaubungsmittel wird dabei in einem eigenen Kreislauf vom Staub befreit und regeneriert, der Staub wird in den Hochtemperaturreaktor zurückgeführt und nimmt dort an der Vergasungsreaktion wieder teil. Damit ist die dem Strömungspfad des Synthesegases zugeordnete Konvertierung der in ihm enthaltenen Schadelemente in wiederbringbare Wertstoffe und deren Überführung in die Wässer der verschiedenen Konvertierungsstufen abgeschlossen. Das so von unerwünschten Beimischungen gereinigte Synthesegas kann, gegebenenfalls nach einer zusätzlichen Kältetrocknung zur Entfernung einer verbliebenen Restfeuchte, einer erneuten Temperierung des trockenen Synthesegases mit nachfolgendem Durchlauf durch ein Aktivkohlefilter einer stofflichen und/oder thermischen Nutzung zugeführt werden. Die Kältetrocknung kann in einer gesonderten Behandlungsstufe erfolgen. Vorteilhaft ist es, diese Stufe mit in den Kombinationskonverter zu integrieren. Die Abwärmen aus dieser Stufe und aus der Sprühquench können bei Bedarf ausgekoppelt und zur Temperierung der Konvertierungsstufen und zur Gaserwärmung genutzt werden.

Die Lösungen und Kondensate der Konvertierungs- und Kühlstufen, die die zu gewinnenden Wertstoffe gelöst, gegebenenfalls auch dispergiert enthalten, werden zusammengeführt und gemeinsam weiterbehandelt. Zunächst werden Eisen und Schwermetalle wie Blei und Zink in einer stufenweisen Hydroxidfällung abgeschieden. Die gefällten Eisenverbindungen der ersten Fällungsstufe werden vorteilhafterweise dem Hochtemperaturreaktor wieder zugeführt, dort mit eingeschmolzen und als nutzbares metallisches Granulat ausgetragen. Die Mischfällungen der nachfolgenden Fällungsstufen enthalten die anderen Schwermetalle und sind - zum Konzentrat aufbereitet - ein verhüttungsfähiger Wertstoff.

Die aus den Hydroxidfällungen ablaufende Lösung enthält überwiegend Alkalichloride. Der verbliebene Teil der Kalziumionen wird durch Einleitung von Kohlendioxid als Kalziumcarbonat gefällt und ebenfalls in den Hochtemperaturreaktor zur Einschmelzung zurückgeführt. In einem Ionentauscher können die noch verbliebenen störenden Kalziumionen, die in geringem Anteil vorhanden sind und das Alkalichlorid-Nutzsalz verunreinigen würden, entfernt werden. Die so gereinigte Alkalichloridlösung wird aufkonzentriert. Hierzu wird vorteilhafterweise die Lösung einer Umkehrosmose unterzogen. Abschließend wird in einem Kristallisations-Eindampfer ein rohstofftaugliches Mischsalz und ein Kondensat gewonnen, das als Betriebswasser beliebig eingesetzt werden kann. Mit dem erfindungsgemäßen Verfahren wird somit sowohl die stoffliche Nutzung aller den Hochtemperaturreaktor verlassenden Gase, Dämpfe und Stäube als auch vollständige Abwasserfreiheit garantiert.

Eine bevorzugt anwendbare Vorrichtung zur Durchführung des erfindungsgemäßen Verfahrens nach den Ansprüchen 1 bis 10 umfaßt einen Strömungspfad für das Synthesegas, einen Rückgewinnungspfad für die konvertierten Wertstoffe und Rückführeinrichtungen zum Hochtemperaturreaktor und zu den Konvertierungsstufen. Dabei umfaßt der Strömungspfad für das Synthesegas zumindest Nachbehandlungsstufen zur
Schockkühlung mit einem pH-Wert < 5,
zur Neutralisation mit einen pH-Wert > 8
sowie einen Kombinationskonverter, der gegebenenfalls weitere Naßbehandlungsstufen zur Konvertierung in wiederbringbare Wertstoffe, eine Glyzerin-Staubwäsche, eine Sulferox-Wäsche und eine Kältetrocknungsstufe enthält. Dem Kombinationskonverter nachgeordnet sind dann noch eine Gaserwärmung und ein Aktivkohlefilter. In der aufgeführten Reihenfolge durchströmt das Synthese-Rohgas den Strömungspfad der Vorrichtung und tritt als hochreines thermisch und/oder stofflich nutzbares Synthesegas aus. Der Rückgewinnungspfad, der der Rückgewinnung der konvertierten Wertstoffe dient, umfaßt zumindest die Reaktionsstufen
Hydroxidfüllung für Eisen,
Hydroxidfällung für andere Schwermetalle,
Kohlendioxidfällung und
Ionentauscher für Kalzium,
Umkehrosmose und
Kristallisationseindampfung,
die das wertstoffbeladene Wasser aus Schockkühlung, Neutralisation und den Konvertierungsstufen gemeinsam durchläuft, nachdem es gesammelt und dem Rückgewinnungspfad über die erste Hydroxidfällung zugeführt wird. Die jeweiligen Raktionsstufen des Rückgewinnungspfades besitzen Austragseinrichtungen für die Wertstoffe Schwefel, Schwermetallhydroxide, Nutzsalz und Nutzgas sowie Rückführeinrichtungen zum Hochtemperaturreaktor für das abgeschiedene Eisenhydroxid und die Stäube aus der Glyzerinwäsche. Das nach der Rückgewinnung der Wertstoffe verbleibende Prozeßwasser steht als Rohstoff Wasser zum beliebigen Einsatz zur Verfügung.

Durch eine Wärmekopplung zwischen Schockkühlung, Gastemperierung, Kältetrocknung und Temperierung der Konvertierungsstufen läßt sich der Gesamtwirkungsgrad der Vorrichtung verbessern, die zu diesem Zweck entsprechende Wärmetauscher, gegebenenfalls auch Wärmepumpen, besitzen kann.

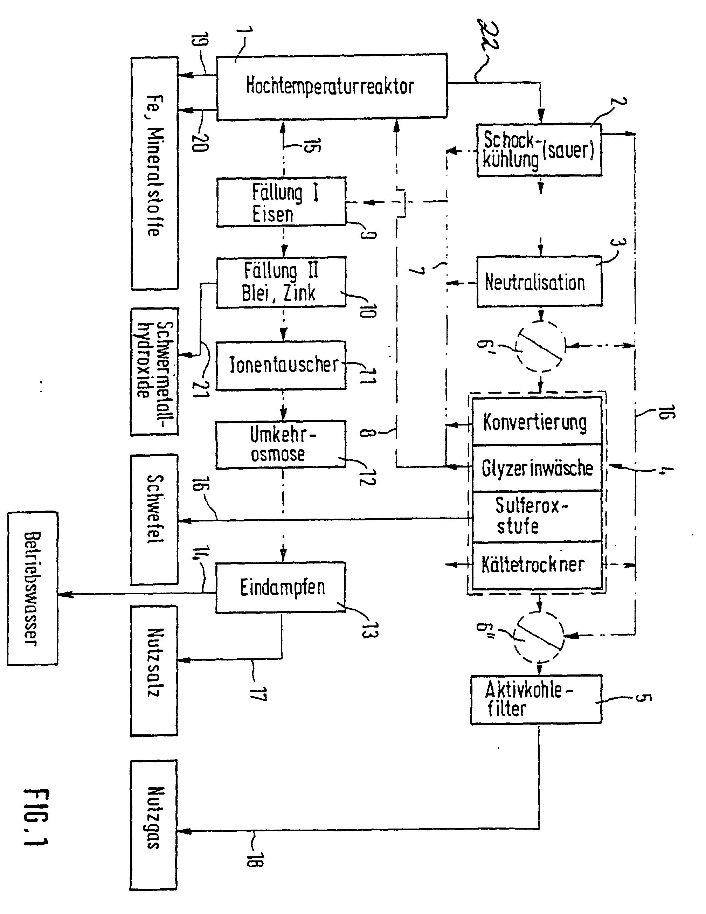

Die Erfindung wird anhand der Figur näher erläutert.

Mit 1 ist in dieser Figur der Hochtemperaturreaktor benannt, der, wie bespielsweise in P 41 30 416 beschrieben, als Ausschmelzreaktor betrieben wird und die Austräge 19 und 20 für Fe und seine Legierungsmetalle und die inertisierten Mineralstoffe sowie den Gasaustrag 22 für das Synthese-Rohgas besitzt, das in die Sprühquench 2 geleitet wird. In dieser Sprühquench 2, die im pH-Bereich < 5, also im sauren Bereich betrieben wird, beginnt die Konvertierung der Inhaltsstoffe, vor allem von Cl, Pb, Zn und mitgeschlepptem Fe. Gleichzeitig erfolgt dabei die schockartige Rückkühlung des Synthese-Rohgases um eine Neubildung organischer Schadstoffe (Dioxine, Furane) zu verhindern. Danach wird das Synthese-Rohgas in das Neutralisationsbad 3 geleitet, das bei einem pH-Wert > 8 die Rohgasfeuchte neutralisiert. Die pH-Wert-Verhältnisse in der Sprühquench 2 und in dem Neutralisationsbad 3 sind dabei aufeinander abgestimmt, sie werden zweckmäßigerweise laufend gemessen und angepaßt. Nach einer gegebenenfalls notwendigen erneuten Gastemperierung 6', die durch die Reaktorbedingungen der nächsten Konvertierungsstufe vorgegeben ist, tritt das Synthese-Rohgas in den Kombinationskonverter 4 ein, der außer einer oder mehrerer Konvertierungsstufen eine Glyzerinwäsche zur Staubentfernung, eine Sulferox-Stufe zur katalytischen Abscheidung von Schwefel und eine Stufe zur Kältetrocknung besitzt. Über den Austrag 16 wird der Schwefel in als Wertstoff verwertbarer Form direkt aus der unabhängig von den übrigen (Naß-)Konvertierungsstufen betriebenen Sulferox-Stufe ausgetragen. Die Glyzerin-Wäsche besitzt für die abgeschiedenen Stäube den Austrag 8, mit dem die Stäube, die mit Schadstoffen adsorbisch beladen sein könnten, zur erneuten Hochtemperaturbehandlung in den Reaktor 1 zurückgeführt werden. Nach der Kältetrocknung wird das Synthese-Rohgas erwärmt (Heizung 6'') und verläßt nach einem Durchlauf durch den Aktivkohlefilter die Vorrichtung durch den Austrag 18 als hochreines Synthesegas. Eine bevorzugte Ausführungsform schlägt hier vor, den Aktivkohlefilter in auswechselbaren gasdurchströmbaren Kassetten unterzubringen. Dadurch werden ein leichter Austausch und die Rückführung der Aktivkohle in den Hochtemperaturreaktor möglich. Die Kassette kann dann wiederverwendet werden. Die in dem beschriebenen Strömungspfad liegenden Wärmequellen und -senken (6, 6', 6", Kältetrocknung) sind dabei mit Hilfe geeigneter Elemente wie Wärmetauscher und Wärmepumpen thermisch gekoppelt, wie mit 16 und den Richtungspfeilen symbolisiert. Die Prozeßwässer der Sprühquench 2, der Neutralisation 3 und des Kombinationskonverters 4 werden gesammelt und mittels des Leitungssystems 7 der ersten Hyxdroxidfällung 9 zugeführt. Das hier abgeschiedene Eisenhydroxid wird über den Austrag 15 in den Hochtemperaturreaktor 1 zurückgeführt und mit eingeschmolzen. Danach durchläuft das gesammelte Prozeßwasser eine zweite Hydroxidfällung 10, in der Blei- und Zinkhydroxide gemeinsam gefällt und über den Austrag 21 als Gemisch ausgetragen werden. Dieses Gemisch ist in bekannter Technik als verhüttungsfähiger Roh- und Wertstoff nutzbar.

In Ergänzung zum vorgestellten Verfahrensablauf ist es auch möglich, nach der zweiten Hydroxidfällung eine zusätzliche Fällung mit CO₂ zwischenzuschalten und noch eventuell vorhandene Kalziumionen auszufällen. Das Prozeßwasser enthält danach vor allem Natrium- und Kaliumchloride, die als Wertstoff nur geringfügig mit Kalzium verunreinigt sein können. In dem Ionentauscher 11 werden diese Kalziumverunreinigungen entfernt und die Alkalichloride in der Umkehrosmosestufe 12 aufkonzentriert, ehe sie in dem Kristallisations-Eindampfer 13 als Nutzsalz gewonnen und über den Austrag 17 ausgebracht werden. Das Prozeßwasser ist damit von seinen Inhaltsstoffen befreit und kann zusammen mit dem Kondensat aus dem Kältetrockner als Betriebswasser beliebig verwendet werden. Der Prozeß ist abwasserfrei.

Die Figur verdeutlicht, daß bei Anwendung des Erfindungsgedankens eine Abfallvergasung nicht nur frei von Schadstoffemissionen, sondern auch unter vollständiger Nutzung der energetischen und stofflichen Inhalte des Abfalls durchgeführt werden kann, und zwar ohne Anfall von Deponie-Restmaterial und ohne Umweltbelastung durch Abwasser.

Mit dem hier vorgeschlagenen Hochtemperatur-Recycling-Verfahren werden Abfälle unterschiedlichster Herkunft und Zusammensetzung vollständig in wiederverwertbare Stoffe transformiert, und zwar in
- mineralisches Granulat,
- Eisenmetall-Legierung,
- Synthesegas,
- destilliertes Wasser,
- elementaren Schwefel,
- elektrolysefähiges Salzgemisch und
- Zink- und Bleikonzentrat.

## Patentansprüche

1. Verfahren zur vollständigen stofflichen, emissionslosen Nutzung aller Bestandteile von kommunalen oder industriellen Abfällen durch Hochtemperatur-Recycling und durch fraktionierte stofflich spezifische Konvertierung des dabei entstehenden Synthese-Rohgases **gekennzeichnet durch** wenigstens folgende Verfahrensschritte:
Stufenweise Konvertierung der als Schadstoffe im Synthese-Rohgas enthaltenen Inhaltsstoffe in Wertstoffe in getrennten, gesondert temperierbaren Naßbehandlungsstufen, wobei die Temperaturbedingungen jeder Behandlungsstufe **durch** die für die partielle Abscheidung erforderlich gestufte Kondensation des im Synthese-Rohgas enthaltenen Wasserdampfes vorgegeben wird,
Zusammenführung der die konvertierten Wertstoffe enthaltenden Lösungen und Kondensate der unterschiedlichen Konvertierungsstufen und stufenweise,Abscheidung der wiedergewinnbaren Wertstoffe **durch** abgestufte Fällungs- und Ionenaustausch-Reaktionen sowie Trennreaktionen unter Rückgewinnung des Prozeßwassers,
Kältetrocknung des **durch** die Schadstoff-Konvertierung gereinigten Synthesegases, und Rückführung des wiedergewonnenen Prozeßwassers zusammen mit dem Kondensat der Kältetrocknung zu den einzelnen Konvertierungsstufen.

2. Verfahren nach Anspruch 1,
**dadurch gekennzeichnet, daß** wenigstens eine katalytisch wirkende, gesondert betreibbare Abscheidungsstufe im Strömungsweg des Synthese-Rohgases angeordnet ist.

3. Verfahren nach Anspruch 1,
**dadurch gekennzeichnet, daß** die Schock-Kühlstufe als Sprühquench ausgebildet und im pH-Bereich < 5 zur Konvertierung des Chlorwasserstoffes und der Schwermetalle in wiedergewinnbare Chloride betrieben wird.

4. Verfahren nach Anspruch 1 und 3,
**dadurch gekennzeichnet, daß** nach der sauer eingestellten Quench die Restfeuchte des Synthese-Rohgases durch eine basisch eingestellte Naßbehandlungsstufe neutralisiert wird und das Synthese-Rohgas dabei auf eine für die nachfolgenden spezifischen Konvertierungsstufen optimale Temperatur eingestellt wird.

5. Verfahren nach den Ansprüchen 1 bis 4,
**dadurch gekennzeichnet, daß** mehrere in einem gemeinsamen, aber unterteilten Behälter angeordnete Konvertierungsstufen verwendet werden, und daß das Synthese-Rohgas mit annäherungsweise konstanter Temperatur diesen "Kombinationskonverter" durchströmt.

6. Verfahren nach den Ansprüchen 1 bis 5,
**dadurch gekennzeichnet, daß** innerhalb des "Kombinationskonverters" eine Partikelabscheidungsstufe mit gegebenenfalls gesondertem Kreislauf des eingesetzten Additivs betrieben wird, und daß die abgeschiedenen Partikel der Vergasungsreaktion wieder zugeführt werden.

7. Verfahren nach den Ansprüchen 1 bis 5,
**dadurch gekennzeichnet, daß** aus den zusammengeführten Lösungen und Kondensaten der Kühl- und Konvertierungsstufen durch eine mindestens zweistufige Hydroxidfällung nacheinander Eisen und andere Schwermetalle wie beispielsweise Zink und Blei zurückgewonnen werden, wobei die gefällten Eisenverbindungen dem Hochtemperaturreaktor wieder zugeführt, dort eingeschmolzen und als metallisches Granulat ausgetragen werden, während Hydroxide der anderen Schwermetalle, verhüttungsfähig als Konzentrat aufbereitet, direkt als Roh- und Wertstoff verwendet werden.

8. Verfahren nach mindestens einem der Ansprüche 1 bis 7,
**dadurch gekennzeichnet, daß** die aus den Hydroxidfällungen ablaufende, überwiegend Alkalichloride enthaltende Lösung in einem Ionenaustauscher von verunreinigenden Kalziumionen befreit wird.

9. Verfahren nach mindestens einem der Ansprüche 1 bis 8,
**dadurch gekennzeichnet, daß** die aus dem Ionentauscher gemäß Anspruch 8 ablaufende gereinigte Alkalichlorid-Lösung durch eine Umkehrosmose aufkonzentriert wird und anschließend daraus in einem Kristallisationseindampfer ein rohstofftaugliches Mischsalz und ein als Prozeßwasser taugliches Kondensat gewonnen werden.

10. Verfahren nach mindestens einem der Ansprüche 1 bis 9,
**dadurch gekennzeichnet, daß** der Schockkühlung eine Wärmerückgewinnung zugeordnet ist, und daß die so gewonnene Wärme zumindest teilweise zur Temperierung des Synthesegases und der Konvertierungsstufen im Kombinationskonverter sowie gegebenenfalls zur Gaserwärmung vor einem Aktivkohlefilter verwendet wird.

11. Vorrichtung zur Durchführung des Verfahrens nach mindestens einem der Ansprüche 1 bis 10,
**dadurch gekennzeichnet, daß** diese einen Strömungspfad für das Synthesegas besitzt, der zumindest die Wirkstufen zur Naßbehandlung
- Schockkühlung (2) mit einem pH-Wert < 5,
- Neutralisation (3) mit einem pH-Wert > 8, und einen
- Kombinationskonverter (4), der mindestens eine Schadstoffkonverterstufe, eine Glyzerinwäsche, eine Sulferox-Wäsche und eine Kältetrocknungsstufe integral enthält, sowie eine
- Gaserwärmung (6") und einen
- Aktivkohlefilter (5)
in der aufgeführten Reihenfolge enthält, die weiterhin einen Rückgewinnungspfad besitzt, der zumindest die Reaktionsstufen
- Hydroxidfällung für Eisen (9),
- Hydroxidfällung für Schwermetalle (10),
- Ionenaustausch Kalzium (11),
- Umkehrosmose (12) und
- Kristallisationseindampfung (13)
enthält, den das stoffbeladene Wasser aus Schockkühlung-Neutralisation und Konvertierung in der angeführten Reihenfolge durchläuft, wobei die Reaktionsstufen Austragseinrichtungen für die Wertstoffe Wasser (14), Nutzgas (18), Nutzsalz (17), Schwefel (16), Schwermetallhydroxyde (21), Eisen (19) und Mineralstoffe (20) besitzen sowie Rückführungseinrichtungen für Eisenhydroxid (15) und Kohlenstoff (8) zum Hochtemperaturreaktor (1).

12. Vorrichtung nach Anspruch 11,
**dadurch gekennzeichnet, daß** im Strömungspfad des Synthesegases zwischen der Neutralisation (3) und dem Kombinationskonverter (4) eine Gastemperierung (6') angeordnet ist.

13. Vorrichtung nach Anspruch 11 oder 12,
**dadurch gekennzeichnet, daß** die Schockkühlung (2) eine Wärmerückgewinnung (6) besitzt, die zumindest teilweise mit der Gastemperierung (6'), der Gaserwärmung (6") und der Kältetrocknung gekoppelt ist.

14. Vorrichtung nach mindestens einem der Ansprüche 11 bis 13,
bei der nacheinander eine Beschickungseinrichtung, ein Entgasungskanal und ein Hochtemperatur-Reaktor angeordnet sind, wobei der Hochtemperatur-Reaktor eine Austragsöffnung für Schmelze und eine Austragsöffnung für das Synthesegas aufweist, der eine Gasreinigungseinrichtung nachgeordnet ist.

## Claims

1. Process for material- and emissionfree use of all components of communal or industrial waste by way of high temperature recycling and by fractionalised material specific conversion of a thus developing synthesis raw gas, **characterised by** at least the following procedural stages:
Step by step conversion of material contained in synthesis raw gas as harmful substance into valent materials in separated and separately tempered wet treatment stages, where the temperature conditions of each treatment stage are given by stepped condensation of water vapour contained in the synthesis raw gas as required for partial separation;
Combining solutions containing the converted valent materials and condensates of the different conversion stages and step by step separation of recoverable valent materials by stepped precipitation and ion exchange reactions as well as separating reactions whilst recovering the process water;
Cold drying synthesis gas which has been purified by way of harmful substance conversion, and feedback of recovered process water together with the condensate of cold drying to the individual conversion stages.

2. Process according to Claim 1, **characterised in that** at least one catalytically acting, separately driveable separation stage is configured in the flow path of the synthesis raw gas.

3. Process according to Claim 1, **characterised in that** the shock-cooling stage is designed as a spray quench and operated in the pH-range < 5 for conversion of the hydrochloric acid and heavy metals in recoverable chloride.

4. Process according to Claim 1 and 3, **characterised in that** after a sour quench the residual humidity of the synthesis raw gas is neutralised by a basic set wet treatment stage, and the synthesis raw gas is then set to a temperature which is optimal for subsequent specific conversion stages.

5. Process according to Claims 1 to 4, **characterised in that** a plurality of conversion stages is used which is arranged in a communal but sectioned vessel, and the synthesis raw gas flows through this "combination converter" at virtually constant temperature.

6. Process according to one of Claims 1 to 5, **characterised in that** within the "combination converter" is operated a particle separating stage, if appropriate with separate circulation of an applied additive, and separated particles are fed back to the gasification reaction.

7. Process according to Claims 1 to 5, **characterised in that** iron and other heavy metals, for example zinc and lead, are one after the other recovered from combined solutions and condensates of the cooling and conversion stages by an at least two stage hydroxide precipitation, and precipitated iron composites are fed back to the high temperature reactor where they are smelted and delivered as metallic granulate whilst the hydroxides of the other heavy metals, prepared as a smeltable concentrate, are used directly as raw or valent material.

8. Process according to at least one of Claims 1 to 7, **characterised in that** the solution which is drained from hydroxide precipitations and contains predominantly alkali chloride is freed of polluted calcium ions in an ion exchanger.

9. Process according to at least one of Claims 1 to 8, **characterised in that** the purified alkali chloride solution, which has been purified and is drained off the ion exchanger according to Claim 8, is concentrated by reversed osmosis, and subsequently a salt mixture suitable as a raw-material and a condensate suitable as condensate are obtained therefrom in a crystallisation evaporator.

10. Process according to at least one of Claims 1 to 9, **characterised in that** shock cooling is associated with a heat recovery, and thus obtained heat is used at least partially for tempering synthesis gas and conversion stages in the combination converter and, if appropriate, for gas heating in front of an active coal filter.

11. Process for carrying out the process according to at least one of Claims 1 to 10, **characterised in that** it includes a flow path for the synthesis gas with at least the following operational stages for wet treatment:
• shock cooling (2) with a pH-value < 5;
• neutralisation (3) with a pH-value >8; and a
• combination converter (4), integrally containing at least a harmful substance converter stage, a glycerine wash and a cold drying stage; as well as a
• gas heating (6"); and an
• active coal filter (5)
in the given order, and which furthermore includes a recovery path which includes at least the reaction stages
• hydroxide precipitation for iron (9);
• hydroxide precipitation for heavy metals (10);
• ion exchange calcium (11);
• reversed osmosis (12); and
• crystallisation evaporation (13),
which passes through the material loaded water of shock cooling - neutralisation and conversion in the given order, and the reaction stages include draining devices for valent materials water (14), useful gas (18), useful salt (17), sulphur (16), heavy metal hydroxides (21), iron (19) and minerals (20) as well as feedback devices for iron hydroxide (15) and carbon (8) to the high temperature reactor (1).

12. Device according to Claim 11, **characterised in that** in the flow path of the synthesis gas between the neutralisation (3) and the combination converter (4) is arranged a gas tempering unit (6').

13. Device according to Claim 11 or 12, **characterised in that** the shock cooling (2) includes a heat recovery (6) which is at least partially connected to gas tempering (6'), gas heating (6") and cold drying.

14. Device according to at least one of Claims 11 to 13, where a feeding device, a degasification channel and a high temperature reactor are arranged one after the other, and the high temperature reactor comprises a delivery opening for the melt and a delivery opening for the synthesis gas with a gas purification device downstream.

## Revendications

1. Procédé d'utilisation matérielle complète et sans émission, de tous les constituants de déchets ménagers ou industriels par recyclage à haute température et par conversion fractionnée, spécifique aux matériaux, du gaz brut de synthèse obtenu, **caractérisé par** au moins les étapes opératoires suivantes :
conversion échelonnée des substances contenues en tant que substances nocives dans le gaz brut de synthèse en des matériaux de valeur dans des étages séparés de traitement humide, pouvant être mis séparément en température, les conditions de température de chaque étage de traitement étant prédéterminées par la condensation étagée, qui est nécessaire pour la séparation partielle, de la vapeur d'eau contenue dans le gaz brut de synthèse,
réunion des solutions des condensats, contenant les substances de valeur converties, des différents étages de conversion et séparation étagée des substances de valeur récupérables, au moyen de réactions étagées de précipitation et d'échange ionique ainsi que des réactions de séparation moyennant la récupération de l'eau de traitement,
séchage à froid du gaz de synthèse purifié par la conversion des substances nocives, et renvoi de l'eau de traitement récupérée conjointement avec le condensat obtenu lors du séchage à froid aux différents étages de conversion.

2. Procédé selon la revendication 1, **caractérisé en ce qu'**au moins un étage de séparation à action catalytique, pouvant fonctionner séparément, est disposé dans le trajet de circulation du gaz brut de synthèse.

3. Procédé selon la revendication 1, **caractérisé en ce que** l'étage de refroidissement brusque est agencé sous la forme d'un étage de trempe à pulvérisation et fonctionne dans la gamme de pH < 5 pour la conversion du gaz chlorhydrique et des métaux lourds en des chlorures récupérables.

4. Procédé selon la revendication 1 et 3, **caractérisé en ce qu'**après la trempe réglée dans une action acide, l'humidité résiduelle du gaz brut de synthèse est neutralisée par un étage de traitement humide réglé sur une action basique et le gaz brut de synthèse est réglé à une température optimale pour les étages de conversion spécifiques suivants.

5. Procédé selon les revendications 1 à 4, **caractérisé en ce qu'**on utilise plusieurs étages de conversion disposés dans un récipient commun, mais divisé, et que le gaz brut de synthèse traverse avec une température approximativement constante ce "convertisseur combiné".

6. Procédé selon l'une des revendications 1 à 5, **caractérisé en ce. qu'**à l'intérieur du "convertisseur combiné", on fait fonctionner un étage de séparation de particules avec un circuit éventuellement particulier de l'additif introduit et que les particules séparées de la réaction de gazéification sont à nouveau envoyées à la réaction de gazéification.

7. Procédé selon les revendications 1 à 5, **caractérisé en ce que** du fer et d'autres métaux lourds comme par exemple du zinc et du plomb sont récupérés successivement à partir des solutions et condensats réunis des étages de refroidissement et de conversion, au moyen d'une précipitation d'hydroxydes au moins en deux étapes, les composés de fer précipités étant envoyés à nouveau au réacteur à haute température, fondus dans ce demier et délivrés sous la forme de granulés métalliques, tandis que des hydroxydes des autres métaux lourds sont utilisés, directement, en étant préparés sous la forme d'un concentré pour un traitement métallurgique, en tant que matière brute et matière de valeur.

8. Procédé selon au moins l'une des revendications 1 à 7, **caractérisé en ce que** la solution, qui s'évacue des précipités d'hydroxydes et contient de façon prépondérante des chlorures alcalins, est libérée d'ions de calcium, qui sont des impuretés, dans un échangeur ionique.

9. Procédé selon au moins l'une des revendications 1 à 8, **caractérisé en ce que** la solution de chlorure alcalin purifiée, qui est délivrée par l'échangeur ionique selon la revendication 8, est concentrée au moyen d'une osmose inverse et qu'ensuite un sel mixte utilisable comme matière brute et un condensat utilisable comme eau de traitement sont obtenus à partir de là dans un évaporateur à cristallisation.

10. Procédé selon au moins l'une des revendications 1 à 9, **caractérisé en ce qu'**une récupération de chaleur est associée au refroidissement brusque et que la chaleur ainsi obtenue est utilisée au moins en partie pour la mise en température du gaz de synthèse et des étages de conversion dans le convertisseur combiné ainsi que, éventuellement, pour le réchauffement du gaz en amont d'un filtre à charbon actif.

11. Dispositif pour la mise en oeuvre du procédé selon au moins l'une des revendications 1 à 10, **caractérisé en ce que** ce dispositif possède un trajet de circulation pour le gaz de synthèse, qui contient selon la succession indiquée au moins les étages actifs pour le traitement humide
- refroidissement brusque (2) avec une valeur du pH < 5,
- neutralisation (3) avec une valeur du pH > 8, et un
- convertisseur combiné (4), qui contient d'une manière intégrée au moins un étage de conversion des substances nocives, un dispositif de lavage à la glycérine, un dispositif de lavage Sulférox et un étage de séchage à froid, ainsi que
- un système d'échauffement de gaz (6") et
- un filtre à charbon actif (5),
et possède en outre un trajet de réaction, qui comprend au moins les étages de réaction
- précipitation d'hydroxydes pour le fer (9),
- précipitation d'hydroxydes pour des métaux lourds (10),
- échange d'ions calcium (11),
- osmose inverse (12), et
- évaporation avec cristallisation (13),
que traverse l'eau chargée de substances provenant du refroidissement brusque - de la neutralisation et de la conversion, selon la séquence indiquée, les étages de réaction comportant des dispositifs d'extraction pour les substances : eau (14), gaz utile (18), sel utile (17), soufre (16), hydroxydes de métaux lourds (21), fer (19) et substances minérales (20), ainsi que des dispositifs de renvoi pour l'hydroxyde de fer (15) et le carbone (8) au réacteur à haute température (1).

12. Dispositif selon la revendication 11, **caractérisé en ce qu'**un dispositif (6') de mise en température du gaz est disposé dans le trajet de circulation du gaz de synthèse entre la neutralisation (3) et le convertisseur combiné (4).

13. Dispositif selon la revendication 11 ou 12, **caractérisé en ce que** l'unité de refroidissement brusque (2) comprend une unité de récupération de chaleur (6), qui est couplée au moins en partie à l'unité (6') de mise en température du gaz, à l'unité (6") de chauffage du gaz et à l'unité de séchage à froid.

14. Dispositif selon au moins l'une des revendications 11 à 13, dans lequel un dispositif de chargement, un canal de dégazage et un réacteur à haute température sont disposés successivement, le réacteur à haute température comportant une ouverture de sortie pour la masse fondue et une ouverture de sortie pour le gaz de synthèse, en aval de laquelle est installé un dispositif d'épuration des gaz.
